# EUROPÄISCHE PATENTSCHRIFT

(11) **EP 3 152 423 B1**
(45) Veröffentlichungstag und Bekanntmachung des Hinweises auf die Patenterteilung: **05.12.2018**
(21) Anmeldenummer: 15729371.3
(22) Anmeldetag: 02.06.2015
(51) Int. Cl.: F01N 3/20

(54) **VERFAHREN ZUR FUNKTIONSPRÜFUNG MINDESTENS EINES PTC-HEIZELEMENTES**
METHOD FOR CHECKING THE FUNCTION OF AT LEAST ONE PTC HEATING ELEMENT
PROCÉDÉ DE CONTRÔLE FONCTIONNEL D'AU MOINS UNE RÉSISTANCE CHAUFFANTE CTP

(30) Priorität: 04.06.2014 DE 102014107863
(43) Veröffentlichungstag der Anmeldung: 12.04.2017
(73) Patentinhaber: Continental Automotive GmbH, 30165 Hannover (DE)
(72) Erfinder: BAUER, Peter, 95505 Immenreuth (DE); HODGSON, Jan, 53840 Troisdorf (DE)
(86) Internationale Anmeldenummer: PCT/EP2015/062291
(87) Internationale Veröffentlichungsnummer: WO 2015/185569

(56) Entgegenhaltungen:
- EP-A2- 1 385 073
- DE-A1-102008 056 860
- DE-A1-102012 103 520
- US-A1- 2012 031 084

## Beschreibung

Die Erfindung betrifft ein Verfahren zur Funktionsüberprüfung mindestens eines PTC-Heizelementes, das in einer Vorrichtung zur Bereitstellung eines flüssigen Additivs eingesetzt ist. Vorrichtungen zur Bereitstellung eines flüssigen Additivs finden beispielsweise im Kraftfahrzeugbereich Anwendung, um einer Abgasbehandlungsvorrichtung zur Reinigung der Abgase einer Verbrennungskraftmaschine des Kraftfahrzeugs ein flüssiges Additiv zuzuführen. Abgasbehandlungsvorrichtungen, bei denen zur Reinigung von Abgasen ein flüssiges Additiv verwendet wird, sind weit verbreitet. Ein besonders häufig in derartigen Abgasbehandlungsvorrichtungen durchgeführtes Abgasreinigungsverfahren ist das Verfahren der selektiven katalytischen Reduktion (SCR-Verfahren; SCR = Selective Catalytic Reduction). Bei diesem Verfahren werden Stickstoffoxidverbindungen im Abgas unter Zuhilfenahme eines Reduktionsmittels reduziert. Als Reduktionsmittel wird dabei typischerweise Ammoniak verwendet. Die Abgasbehandlungsvorrichtung weist typischerweise einen SCR-Katalysator auf, an dem die Stickstoffoxidverbindungen im Abgas mit Hilfe des Ammoniaks reduziert werden. Ammoniak wird in Kraftfahrzeugen regelmäßig nicht direkt bevorratet, sondern in Form einer Reduktionsmittelvorläuferlösung gespeichert. Diese Reduktionsmittelvorläuferlösung ist ein flüssiges Additiv. Eine besonders häufig eingesetzte Reduktionsmittelvorläuferlösung ist Harnstoff-Wasser-Lösung. Eine 32,5-prozentige Harnstoff-Wasser-Lösung ist unter dem Handelsnamen AdBlue® erhältlich.

Beim Betriebsstart einer solchen Vorrichtung ist problematisch, dass diese flüssigen Additive bei niedrigen Temperaturen einfrieren können. Die oben beschriebene Harnstoff-Wasser-Lösung friert beispielsweise bei -11 °C ein. Derart niedrige Temperaturen können insbesondere während einer langen Stillstandsphase des Kraftfahrzeugs auftreten. Nach einer langen Stillstandsphase kann es passieren, dass das flüssige Additiv in der Vorrichtung vollständig eingefroren ist. Die Vorrichtung kann dann zunächst kein flüssiges Additiv bereitstellen. Es ist bekannt, dass Vorrichtungen zur Bereitstellung von flüssigem Additiv ein Heizungssystem aufweisen, um eingefrorenes flüssiges Additiv aufzuschmelzen, so dass zeitnah beim Betriebsstart eine Bereitstellung von flüssigem Additiv möglich ist.
Als Heizung für derartige Vorrichtungen werden insbesondere PTC-Heizelemente (PTC = Positive Temperature Coefficient) vorgeschlagen. PTC-Heizelemente sind elektrische Heizelemente, die durch einen hindurchfließenden elektrischen Strom erwärmt werden. Sie haben die zusätzliche Eigenschaft, dass sich der elektrische Widerstand für den Strom bei steigender Temperatur erhöht. So wird erreicht, dass sich der elektrische Strom bei hohen Temperaturen automatisch verringert. Durch die Verringerung des elektrischen Stroms verringert sich auch die Heizleistung. Dies stellt einen automatischen Schutz eines PTC-Heizelementes gegen Überhitzen dar.
Bei diesen Vorrichtungen mit PTC-Heizelementen ist eine unzureichende Ableitung der Wärme von dem PTC-Heizelement problematisch, da sich das PTC-Heizelement in kurzer Zeit auf eine hohe Temperatur erwärmt und im Folgenden nur noch einen geringen elektrischen Strom leitet. Die Heizleistung wird damit in kurzer Zeit selbstregelnd begrenzt, so dass die gewünschte Heizfunktion in nur noch geringem Maß erfüllt wird.
DE 10 2008 056 860 A1 offenbart eine solche Vorrichtung zur Bereitstellung eines Reduktionsmittels, welche ein PTC-Heizelement im Reduktionsmittel-Behälter zur Erwärmung dieses Reduktionsmittels mit Heizstrom beaufschlagt.

Hiervon ausgehend ist es daher Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhaftes Verfahren zur Funktionsprüfung mindestens eines PTC-Heizelementes vorgeschlagen werden.
Diese Aufgaben werden gelöst mit einem Verfahren gemäß den Merkmalen des Patentanspruchs 1. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren zur Funktionsprüfung mindestens eines PTC-Heizelementes, wobei das mindestens eine PTC-Heizelement in einer Vorrichtung zur Bereitstellung eines flüssigen Additivs eingesetzt ist und über elektrische Leiter mit einer Spannungsquelle verbunden ist, umfasst zumindest die folgenden Schritte:
a) Bereitstellen eines Einschaltstroms mit einem ersten Wert (von x Ampere) bei einer vorbestimmten Betriebsspannung (von y Volt); und dann
b) Überwachen, ob der Einschaltstrom mit dem ersten Wert (x Ampere) für eine Mindestdauer (von z s [Sekunden]) bereitgestellt wird, wobei die Mindestdauer (z) mindestens 5 Sekunden, vorzugsweise mindestens 10 Sekunden beträgt.

Insbesondere wird ein PTC-Heizelement in der Vorrichtung an eine Wärmeleitstruktur wärmeleitend angebunden, so dass über die Wärmeleitstruktur eine Verteilung der Wärme, ausgehend von dem PTC-Heizelement und hin zu dem flüssigen Additiv, erfolgt. Die Heizfunktion des PTC-Heizelementes im Hinblick auf das flüssige Additiv ist dabei unmittelbar abhängig von der Ableitung der Wärme von dem PTC-Heizelement. Eine unzureichende Ableitung der Wärme führt dazu, dass das PTC-Heizelement innerhalb kurzer Zeit eine hohe Temperatur erreicht, so dass die Heizleistung in kurzer Zeit selbstregelnd begrenzt und die gewünschte Heizfunktion in nur noch geringem Maß erfüllt wird.

Das PTC-Heizelement ist ein elektrischer Heizleiter, der auch als Kaltleiter bezeichnet wird. Bei einem PTC-Heizelement ist der elektrische Widerstand bei niedrigen Temperaturen deutlich geringer ist als bei höheren Temperaturen. Die elektrische Leitfähigkeit ist somit bei niedrigen Temperaturen deutlich höher. Daher stammt auch die Bezeichnung "Kaltleiter". Vorzugsweise ist der elektrische Widerstand bei niedrigen Temperaturen annähernd konstant und steigt dann ab einer Nenntemperatur stark an. Ab einer Endtemperatur ist der elektrische Widerstand dann auf einem hohen Niveau wieder konstant.

Ein PTC-Heizelement wird vorzugsweise mit einer fest vorgegebenen Heizspannung von beispielsweise 12 Volt oder 24 Volt betrieben. Aufgrund der Temperaturabhängigkeit des elektrischen Widerstandes passt sich der Stromfluss durch das PTC-Heizelement bei einer fest vorgegebenen Heizspannung und bei steigender Temperatur automatisch an. Damit sinkt auch die Heizleistung des PTC-Heizelementes, so dass eine weitere Erwärmung auf noch höhere Temperaturen nicht mehr auftritt. Ein PTC-Heizelement ist somit in einem relativ engen Temperaturbereich selbstregelnd. Ein PTC-Heizelement für eine Vorrichtung zur Bereitstellung von flüssigem Additiv ist vorzugsweise in einem eng umgrenzten Temperaturbereich selbstregelnd. Der Temperaturbereich des mindestens einen PTC-Heizelements liegt vorzugsweise zwischen 10 °C [Grad Celsius] und 80 °C. Die Temperaturangaben 10 °C und 80 °C definieren dabei eine maximale obere Grenze und eine minimale untere Grenze des Temperaturbereichs. Die Temperaturbereiche bei geeigneten PTC-Heizelementen liegen beispielsweise zwischen 20 °C und 30 °C oder zwischen 30 °C und 50 °C oder zwischen 50 °C und 60 °C. Ab ca. 10 °C ist eine effektive Aufschmelzung von eingefrorenem flüssigem Additiv möglich. Ab ca. 80 °C besteht die Gefahr einer chemischen Umwandlung des flüssigen Additivs, so dass Temperaturen oberhalb von 80 °C vermieden werden sollten. Innerhalb der Grenzen von 10 °C und 80 °C ermöglichen höhere Temperaturen ein besonders schnelles Auftauen von eingefrorenem flüssigem Additiv, weil bei höheren Temperaturen die produzierte Wärme besonders schnell in das eingefrorene flüssige Additiv eindringt. Niedrige Temperaturen ermöglichen ein besonders gleichmäßiges Auftauen von eingefrorenem flüssigem Additiv, weil bei niedrigen Temperaturen geringere lokale Temperaturspitzen auftreten. Gleichzeitig können mit niedrigen Temperaturen Energieverluste beim Auftauen vermieden werden.

Insbesondere wird in Schritt a) ein Einschaltstrom bei einer vorbestimmten Betriebsspannung (von y Volt) bereitgestellt, wobei in Schritt b) überwacht wird, ob der Einschaltstrom zumindest den ersten Wert (x Ampere) erreicht (oder übersteigt) und ob zumindest der erste Wert (also x Ampere oder höher) für eine Mindestdauer bereitgestellt wird.

Insbesondere ist das Verfahren für die Erstinbetriebnahme im Kraftfahrzeug und/ oder zur Funktionsprüfung nach erfolgter Montage der Vorrichtung geeignet. Das Verfahren kann aber auch nach einem Kaltstart der Verbrennungskraftmaschine (im regulären Betrieb des Kraftfahrzeuges) durchgeführt werden. Beispielsweise kann das Verfahren auch bei jeder Inbetriebnahme einer Verbrennungskraftmaschine eines Kraftfahrzeuges durchgeführt werden. Damit kann die Heizfunktion des PTC-Heizelementes während der Herstellung der Vorrichtung oder des Kraftfahrzeugs oder während der Nutzungszeit des Kraftfahrzeugs (z. B. nach Kaltstarts oder bei Überprüfung im Rahmen einer Fahrzeuginspektion) überprüft werden. Bei fehlerfreier wärmeleitender Anbindung des PTC-Heizelements an eine Wärmeleitstruktur und/ oder an ein Gehäuse, in dem das gefrorene/flüssige Additiv gelagert ist, wird Wärme in vorbestimmbarer Weise von dem PTC-Heizelement abgeleitet. Der Einschaltstrom wird dann für eine vorgegebene Mindestdauer von dem PTC-Heizelement aufgenommen und zumindest teilweise in Wärme umgesetzt, ohne dass das PTC-Heizelement eine derartig hohe Temperatur erreicht, bei der durch die Erhöhung des elektrischen Widerstandes des PTC-Heizelementes die Stromaufnahme auf einen Wert kleiner als der Einschaltstrom begrenzt wird.

Infolge der Überwachung des elektrischen Stroms kann also eine OBD (On-Board-Diagnosis) im Kraftfahrzeug selbst oder an der zusammengebauten Vorrichtung (auch vor dem Verbau im Kraftfahrzeug) erfolgen. Dabei ist es nicht erforderlich, weitere Sensoren einzusetzen. Insbesondere ist es nicht erforderlich, ein gesondertes Testverfahren durchzuführen. Das erfindungsgemäße Verfahren kann insbesondere im Rahmen des üblichen Betriebs der Vorrichtung (d. h. mit den für den normalen Betrieb vorgesehenen Parametern) durchgeführt werden. Besonders vorteilhaft ist das Verfahren, wenn nach Schritt b) eine Fehlfunktion des mindestens einen PTC-Heizelementes festgestellt wird. Die Fehlfunktion liegt dann vor, wenn der Einschaltstrom den ersten Wert während der Mindestdauer unterschreitet.

Sind in der Vorrichtung mehrere PTC-Heizelemente vorhanden, kann mit der Überwachung in Schritt b) insbesondere festgestellt werden, ob alle PTC-Heizelemente der Vorrichtung (wie vorgesehen) in Betrieb sind.

Folgende Parameter können beispielsweise verwendet werden:

| | |
|---|---|
| Erster Wert x: | 10 Ampere, insbesondere zwischen 5 und 15 A |
| Betriebsspannung y: | 12, 24 oder 48 Volt, insbesondere zwischen 12 und 48 V |
| Mindestdauer z: | 5 Sekunden, insbesondere zwischen 10 und 30 s |

Gemäß einer vorteilhaften Weiterbildung umfasst das Verfahren zumindest die zusätzlichen, auf Schritt b) nachfolgenden Schritte:
c) Überprüfen, ob während Ablauf einer Prüfzeit seit Schritt a) kontinuierlich ein elektrischer Strom bereitgestellt wird; und dann
d) Überprüfen, ob nach Ablauf einer Prüfzeit (von a Sekunden) nach Schritt a) ein elektrischer Betriebsstrom mit mindestens einem zweiten Wert (von mindestens b Ampere) bereitgestellt wird, wobei gilt Prüfzeit (a) > Mindestdauer (z).

Besonders vorteilhaft ist, dass nach Schritt d) erkannt wird, dass eine Wärmeableitung von dem mindestens einen PTC-Heizelement fehlerhaft ist, wenn der elektrische Betriebsstrom den zweiten Wert unterschreitet.

In einer weiteren Ausführungsvariante des Verfahrens wird nach Schritt d) mindestens einer der folgenden Fehler in der Vorrichtung erkannt, wenn der elektrische Betriebsstrom den zweiten Wert von b Ampere unterschreitet:
- eine fehlerhafte wärmeleitende Anbindung mindestens eines PTC-Heizelementes der Vorrichtung,
- eine fehlerhafte wärmeleitende Anbindung mindestens einer Wärmeleitstruktur der Vorrichtung, und
- Risse in einer Wärmeleitstruktur oder in dem Gehäuse der Vorrichtung.

Dies ist eine nicht abschließende Aufzählung von möglichen Ursachen einer nicht ausreichenden Wärmeableitung von dem mindestens einen PTC-Heizelement. Durch Risse in der Wärmeleitstruktur oder dem Gehäuse kann die Ableitung von Wärme durch die Wärmeleitstruktur oder durch das Gehäuse unterbrochen oder behindert werden, weil der Wärmefluss durch das Gehäuse bzw. durch die Wärmeleitstruktur unterbrochen ist. Durch eine fehlerhafte Anbindung der Wärmeleitstruktur oder des mindestens einen PTC-Heizelementes kann die Ableitung von Wärme von dem mindestens einen PTC-Heizelement durch eine Unterbrechung des Wärmeflusses an einer Wärmeübergangsfläche zwischen den beschriebenen Komponenten (PTC-Heizelement, Wärmeleitstruktur oder Gehäuse) beeinträchtigt sein.

Die Schritte c) und d) stellen eine erweiterte Funktionsprüfung dar. Hier wird überprüft, ob auch nach einer längeren Zeitdauer eine ausreichende Ableitung der im PTC-Heizelement erzeugten Wärme erfolgt. Dabei ist Voraussetzung für Schritt d), dass gemäß Schritt c) überprüft und festgestellt wird, dass von dem PTC-Heizelement kontinuierlich (ohne Unterbrechung seit Beginn von Schritt a)) ein elektrischer Strom (> 0 Ampere; insbesondere > b Ampere) aufgenommen wurde. Für Schritt d) wird eine Prüfzeit festgelegt, wobei gilt: Prüfzeit > Mindestdauer. Die Prüfzeit beginnt mit der Bereitstellung des Einschaltstroms gemäß Schritt a). Nach Ablauf der Prüfzeit wird der von dem PTC-Heizelement aufgenommene elektrische Betriebsstrom ermittelt und mit einem vorgegebenen zweiten Wert verglichen. Der zweite Wert für den elektrischen Betriebsstrom ist hier mit "b" bezeichnet. Beträgt der Betriebsstrom bei Ablauf der Prüfzeit mindestens b Ampere, so erfüllt die wärmeleitende Verbindung zwischen PTC-Heizelement und Wärmeleitstruktur bzw. zwischen PTC-Heizelement und Gehäuse, in dem das gefrorene/ flüssige Additiv gelagert ist, die vorgesehene Funktion, wobei die vorgesehene Funktion hier insbesondere die erfolgreiche und dauerhafte Ableitung von Wärme beschreibt. Um diese Funktion zu erfüllen, ist es insbesondere erforderlich, dass die Anbindung einer Wärmeleitstruktur an das mindestens eine PTC-Heizelemente und/oder die Anbindung eines Gehäuses der Vorrichtung an das mindestens eine PTC-Heizelement oder an eine Wärmeleitstruktur geeignet ausgestaltet sind. Wenn die Funktion wie vorgesehen erfüllt ist, ist eine Reparatur oder ein Ersatz von Komponenten nicht erforderlich.

Folgende Parameter können beispielsweise für Schritte c) und d) verwendet werden:

| | |
|---|---|
| Prüfzeit a: | zwischen 100 und 480 Sekunden, insbesondere 300 s; |
| Betriebsstrom b: | zwischen 4 und 10 A, insbesondere 6 Ampere. |

Insbesondere wird vorgeschlagen, dass für das Verfahren Referenzwerte für bestimmte Parameter ermittelt und/oder vorgegeben werden, so dass eine Vorrichtung (auch außerhalb eines Kraftfahrzeuges, nämlich innerhalb einer Versuchsanordnung) hinsichtlich der Heizfunktion mindestens eines PTC-Heizelementes in einfacher Weise überprüft werden kann. Diese Parameter sind insbesondere erster Wert der Stromstärke des Einschaltstroms, Betriebsspannung, Mindestdauer der Aufnahme des Einschaltstroms, Prüfzeit, Betriebsstrom.

Insbesondere wird bei dem Verfahren zumindest für einen der Schritte b) und d) zumindest ein Betriebsparameter der Vorrichtung berücksichtigt, wobei die Vorrichtung folgende Betriebsparameter umfasst:
- Temperatur des (gefrorenen) flüssigen Additivs;
- Umgebungstemperatur der Vorrichtung;
- Temperatur des mindestens einen PTC-Heizelements;
- Anlaufstrom der Pumpe (also durch die Pumpe aufgenommener elektrischer Strom nach Einschalten der Pumpe, welcher einen Rückschluss auf Aggregat-Zustand des Additivs - also z. B. flüssig oder gefroren - erlaubt);
- Verwendung des Wertes des zuletzt ermittelten Füllstands des flüssigen Additivs im Tank und Ermittlung der durch das mindestens eine PTC-Element zur Verfügung gestellten Heizenergie [Joule] nach Einschalten und kontinuierlichem Betrieb des mindestens einen PTC-Elements.

Die Werte der Betriebsparameter können insbesondere kontinuierlich ermittelt werden oder jeweils vor oder gleichzeitig mit zumindest den Schritten b) und d). Die Temperatur des flüssigen Additivs wird insbesondere innerhalb eines Tanks der Vorrichtung ermittelt. Die Umgebungstemperatur ist die Temperatur der Umgebung, die auf die Vorrichtung einwirkt (also die Temperatur in dem Bereich des Kraftfahrzeuges, in dem die Vorrichtung angeordnet ist; die Temperatur der Umgebung, in der die Vorrichtung zur Durchführung des Verfahrens angeordnet ist; usw.). Die Temperatur des PTC-Heizelements kann unmittelbar an dem PTC-Heizelement oder mittelbar über die Wärmeleitstruktur oder elektrische Stromaufnahme ermittelt werden.

Insbesondere wird eine Spannungsquelle verwendet, die eine maximale elektrische Leistung von weniger als 200 Watt bereitstellen kann. Vorzugsweise liegt die maximale elektrische Leistung der Stromversorgungsquelle zwischen 72 Watt und 144 Watt. Bei einer zur Verfügung stehenden Spannung von 12 Volt entspricht dies einem maximal verfügbaren Strom von zwischen 6 Ampere und 12 Ampere. Das mindestens eine PTC-Heizelement ist vorzugsweise so ausgelegt, dass die Durchführung des beschriebenen Verfahrens mit einer Spannungsquelle mit der angegebenen maximalen elektrischen Leistung möglich ist.

Insbesondere ist es möglich, dass zumindest einer der genannten Werte x, y, z, a und b in Abhängigkeit von der Temperatur angepasst werden. Außerdem ist eine Anpassung von zumindest einem der Werte x, y, z, a und b in Abhängigkeit von der Umgebungstemperatur möglich. Weiterhin möglich ist die Anpassung von zumindest einem der Werte x, y, z, a und b in Abhängigkeit von einer Temperatur des mindestens einen PTC-Heizelementes.

Es wird weiterhin eine Vorrichtung zur Bereitstellung eines flüssigen Additivs vorgeschlagen, die mindestens ein PTC-Heizelement aufweist, welches dazu eingerichtet ist, eingefrorenes flüssiges Additiv in der Vorrichtung aufzuschmelzen; wobei die Vorrichtung mit einer Überwachungseinheit verbunden ist, die zur Durchführung des erfindungsgemäßen Verfahrens geeignet ist.

Die im Zusammenhang mit dem beschriebenen Verfahren geschilderten besonderen Vorteile und Ausgestaltungsmerkmale sind in analoger Weise auf die beschriebene Vorrichtung anwendbar und übertragbar. Gleiches gilt für die im Folgenden geschilderten besonderen Vorteile und Ausgestaltungsmerkmale der Vorrichtung, die in analoger Weise auf das beschriebene Verfahren anwendbar und übertragbar sind.

Die Vorrichtung ist vorzugsweise in einen Tank als Einbaueinheit eingesetzt. Die Vorrichtung hat vorzugsweise ein Gehäuse und ist am Tankboden des Tanks angeordnet. Die Vorrichtung weist insbesondere eine Ansaugstelle auf, an der flüssiges Additiv (insbesondere Harnstoff-Wasser-Lösung) aus dem Tank entnommen werden kann. Darüber hinaus weist die Vorrichtung vorzugsweise einen Leitungsanschluss auf, an welchen eine Zugabeleitung zur Bereitstellung des flüssigen Additivs angeschlossen werden kann. Üblicherweise verläuft von der Ansaugstelle zu dem Leitungsanschluss durch die Vorrichtung ein Kanal. In dem Kanal ist eine Pumpe angeordnet, mit der das flüssige Additiv gefördert werden kann. Die Vorrichtung weist mehrere PTC-Heizelemente auf. Die PTC-Heizelemente sind mit einer Wärmeleitstruktur an das Gehäuse des Tanks angebunden. In dem Tank befindet sich um die Vorrichtung herum ein Startvolumen von flüssigem Additiv. Die PTC-Heizelemente sind dazu eingerichtet, flüssiges Additiv in dem Startvolumen durch das Gehäuse der Vorrichtung hindurch aufzuheizen. Die Wärmeleitstruktur liegt dazu vorzugsweise großflächig an dem Gehäuse an, damit die Flüssigkeit in dem Tank mit Hilfe des mindestens einen PTC-Heizelementes effektiv aufgeheizt werden kann. Die PTC-Heizelemente (und üblicherweise auch die Pumpe der Vorrichtung) werden von einer Spannungsquelle der Vorrichtung über elektrische Leiter mit elektrischem Strom und einer elektrischen Spannung versorgt. Außen um das Gehäuse herum ist optional noch ein Filter angeordnet, der das Startvolumen zwischen Filter und Gehäuse begrenzt und die Ansaugstelle verdeckt, so dass das flüssige Additiv bei der Entnahme aus dem Tank mit dem Filter gefiltert wird. Außen um das Gehäuse und außerhalb des Filters ist optional ein weiterer Grobfilter angeordnet, der Beschädigungen des Filters verhindern kann. Das flüssige Additiv innerhalb des Tanks (außerhalb des Grobfilters) weist eine Temperatur auf. Diese Temperatur ist ein Betriebsparameter der Vorrichtung, der bei der Durchführung des Verfahrens berücksichtigt werden kann.

Besonders wichtig für das beschriebene Verfahren und die beschriebene Vorrichtung ist die Anbindung des mindestens einen PTC-Heizelementes der Vorrichtung an eine Wärmeleitstruktur der Vorrichtung. Diese Anbindung kann insbesondere mit Hilfe von Schritt d) des beschriebenen Verfahrens wirkungsvoll überprüft werden.

Zudem wird ein Kraftfahrzeug vorgeschlagen, das eine Verbrennungskraftmaschine, eine Abgasbehandlungsvorrichtung zur Reinigung der Abgase der Verbrennungskraftmaschine und eine erfindungsgemäße Vorrichtung zur Bereitstellung eines flüssigen Additivs für die Abgasbehandlungsvorrichtung aufweist.

In der Abgasbehandlungsvorrichtung ist vorzugsweise ein SCR-Katalysator angeordnet, mit dem das Verfahren der selektiven katalytischen Reduktion durchgeführt werden kann. Die beschriebene Vorrichtung ist vorzugsweise an eine Zugabeleitung angeschlossen. Diese Zugabeleitung führt zu einer Zugabevorrichtung, mit der das flüssige Additiv der Abgasbehandlungsvorrichtung zugeführt werden kann. Die Zugabevorrichtung hat dazu vorzugsweise eine Düse, die das flüssige Additiv in der Abgasbehandlungsvorrichtung (ggf. mit Hilfe eines Druckmediums wie Luft) fein zerstäubt und/oder einen Injektor, mit dem das flüssige Additiv dosiert werden kann. Der Injektor kann beispielsweise ein elektrisch öffnendes und schließendes Ventil sein.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: ein Kraftfahrzeug mit einer Vorrichtung;
- Fig. 2:: einen Tank mit einer Vorrichtung, und;
- Fig. 3:: ein Strom-/ Spannung- und Zeit-Diagramm.

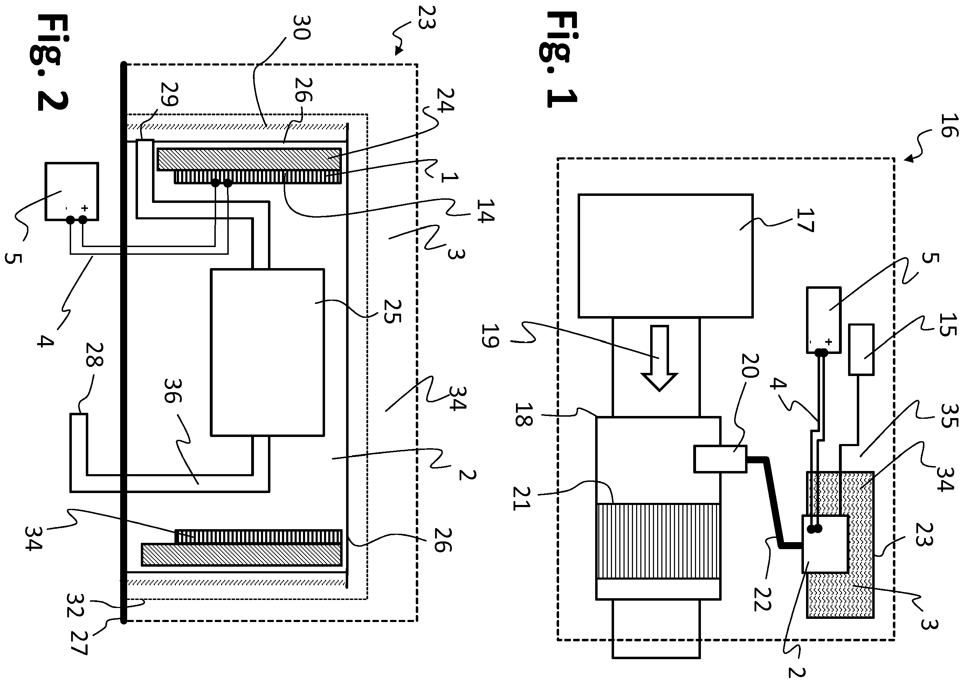

Fig. 1 zeigt ein Kraftfahrzeug 16, aufweisend eine Verbrennungskraftmaschine 17 und eine Abgasbehandlungsvorrichtung 18 zur Reinigung der Abgase 19 der Verbrennungskraftmaschine 17. In der Abgasbehandlungsvorrichtung 18 ist ein SCR-Katalysator als Abgasreinigungskomponente 21 vorgesehen. An der Abgasbehandlungsvorrichtung 18 ist eine Zugabevorrichtung 20 angeordnet, mit der das flüssige Additiv 3 der Abgasreinigungskomponente 21 zugeführt werden kann. Die Zugabevorrichtung 20 wird von einer Vorrichtung 2 über eine Zugabeleitung 22 mit flüssigem Additiv 3 aus einem Tank 23 versorgt. Das flüssige Additiv 3 weist eine Temperatur 34 auf, die hier beispielhaft in dem Tank 23 markiert ist. Die Vorrichtung 2 ist in einer Umgebung angeordnet (z. B. in der Nähe des Kraftstofftanks des Kraftfahrzeuges), wobei die Umgebung eine Umgebungstemperatur 35 aufweist, die hier beispielhaft außerhalb des Tanks 23 markiert ist. In der Vorrichtung 2 sind unter anderem PTC-Heizelemente (hier nicht gezeigt) angeordnet, die über elektrische Leiter 4 mit einer Spannungsquelle 5 verbunden sind. Die Vorrichtung 2 ist mit einer Überwachungseinheit 15 verbunden.

Fig. 2 zeigt einen Tank 23 in einer Seitenansicht, in dem eine Vorrichtung 2 als Einbaueinheit eingesetzt ist. Die Vorrichtung 2 hat ein Gehäuse 26 und ist am Tankboden 27 des Tanks 23 angeordnet. Die Vorrichtung 2 weist eine Ansaugstelle 29 auf, an der flüssiges Additiv 3 (insbesondere Harnstoff-Wasser-Lösung) aus dem Tank 23 entnommen werden kann. Darüber hinaus weist die Vorrichtung 2 einen Leitungsanschluss 28 auf, an welchen eine Zugabeleitung 22 zur Bereitstellung des flüssigen Additivs 3 angeschlossen werden kann. Von der Ansaugstelle 29 zu dem Leitungsanschluss 28 verläuft durch die Vorrichtung 2 ein Kanal 36. In dem Kanal 36 ist eine Pumpe 25 angeordnet, mit der das flüssige Additiv 3 gefördert werden kann. Die Vorrichtung 2 weist mehrere PTC-Heizelemente 1 auf. Die PTC-Heizelemente 1 sind mit einer Wärmeleitstruktur 24 an das Gehäuse 26 des Tanks 23 angebunden. In dem Tank 23 befindet sich um die Vorrichtung 2 herum ein Startvolumen von flüssigem Additiv 3. Die PTC-Heizelemente 1 sind dazu eingerichtet, flüssiges Additiv 3 in dem Startvolumen durch das Gehäuse 26 der Vorrichtung 2 hindurch aufzuheizen. Die PTC-Heizelemente 1 (und die Pumpe 25) werden von einer Spannungsquelle 5 der Vorrichtung 2 über elektrische Leiter 4 mit elektrischem Strom 10 und einer elektrischen Spannung 31 versorgt. Außen um das Gehäuse 26 herum ist optional noch ein Filter 30 angeordnet, der das Startvolumen zwischen Filter 30 und Gehäuse 26 begrenzt und die Ansaugstelle 29 verdeckt, so dass das flüssige Additiv 3 bei der Entnahme aus dem Tank 23 mit dem Filter 30 gefiltert wird. Außen um das Gehäuse 26 und außerhalb des Filters 30 ist optional ein weiterer Grobfilter 32 angeordnet, der Beschädigungen des Filters 30 verhindern kann. Das flüssige Additiv 3 innerhalb des Tanks 23 (außerhalb des Grobfilters 32) weist eine Temperatur 34 auf. Diese Temperatur 34 ist ein Betriebsparameter 14 der Vorrichtung 2, der bei der Durchführung des Verfahrens berücksichtigt werden kann.

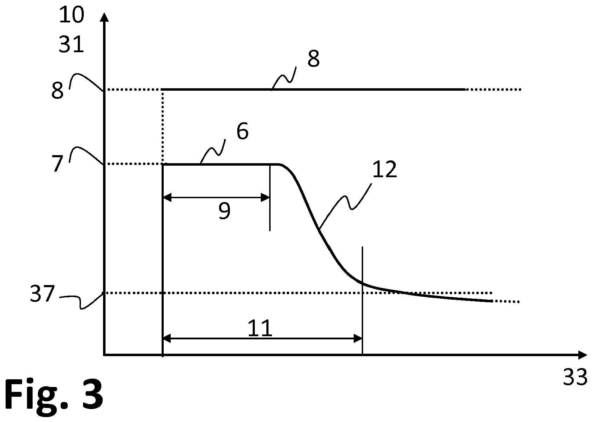

Fig. 3 zeigt ein Strom-/ Spannung- und Zeit-Diagramm. Auf der vertikalen Achse sind elektrischer Strom 10 und elektrische Spannung 31 aufgetragen, auf der horizontalen Achse ist die Zeit 33 aufgetragen. Zu einem bestimmten Zeitpunkt wird dem PTC-Heizelement 1 über eine Spannungsquelle 5 ein Einschaltstrom 6 mit einem ersten Wert 7 (z. B. 10 Ampere) bei einer Betriebsspannung 8 (z. B. 12 Volt) bereitgestellt (Schritt a)). Gemäß Schritt b) des Verfahrens zur Funktionsprüfung des PTC-Heizelements 1 wird überwacht, ob der Einschaltstrom 6 für eine Mindestdauer 9 von z Sekunden (z. B. 10 Sekunden) bereitgestellt wird. Sollte dies nicht der Fall sein, liegt wahrscheinlich eine fehlerhafte Anbindung des PTC-Heizelements 1 an die Wärmeleitstruktur 24 vor. Die Vorrichtung 2 wäre dann zu überprüfen bzw. zu reparieren. Im vorliegenden Diagramm wird die Mindestdauer 9 jedoch überschritten, so dass anzunehmen ist, dass eine vollfunktionsfähige wärmeleitende Verbindung zwischen PTC-Heizelement 1 und Wärmeleitstruktur 24, bzw. zwischen Wärmeleitstruktur 24 und dem Gehäuse 26 des Tanks 23 vorliegt.

Gemäß Schritt c) des Verfahrens wird überprüft, ob seit Bereitstellung des Einschaltstroms 6 (Schritt a)) kontinuierlich eine elektrischer Strom 10 bereitgestellt wurde. Ist dies der Fall, wird in Schritt d) überprüft, ob nach Ablauf einer Prüfzeit 11 (z. B. nach 300 Sekunden, gerechnet von Bereitstellung des Einschaltstroms 6 ein elektrischer Betriebsstrom 12 mit mindestens einem zweiten Wert 37 von mindestens b Ampere (z. B. 6 Ampere) bereitgestellt wird. Sollte nach kontinuierlicher Stromaufnahme (Schritt c)) und nach Ablauf der Prüfzeit 11 also ein geringerer elektrischer Betriebsstrom 12 als b Ampere von dem PTC-Heizelement aufgenommen werden, ist ebenfalls anzunehmen, dass wahrscheinlich eine fehlerhafte Anbindung des PTC-Heizelements 1 an die Wärmeleitstruktur 24 vorliegt. Auch in diesem Fall ist die Ableitung der Wärme über die Wärmeleitstruktur 24 weg von dem PTC-Heizelement 1 hin zum flüssigen Additiv 3 nicht ausreichend, so dass die Temperatur 34 des PTC-Heizelementes 1 schnell ansteigt. Mit steigender Temperatur 34 des PTC-Heizelementes 1 steigt aber auch der elektrische Widerstand, so dass der von dem PTC-Heizelement 1 aufgenommene elektrische Strom 10 verringert wird. Im vorliegenden Diagramm nimmt das PTC-Heizelement 1 nach Ablauf der Prüfzeit 11 jedoch einen elektrischen Betriebsstrom 12 mit mehr als b Ampere auf, so dass anzunehmen ist, dass eine vollfunktionsfähige wärmeleitende Verbindung zwischen PTC-Heizelement 1 und Wärmeleitstruktur 24, bzw. zwischen Wärmeleitstruktur 24 und dem Gehäuse 26 des Tanks 23 vorliegt.

Durch die Erfindung wird ein besonders vorteilhafter Betrieb einer Vorrichtung zur Bereitstellung von flüssigem Additiv möglich. Insbesondere ist eine Funktionsprüfung der wärmeleitenden Anbindung von PTC-Heizelementen 1 an Wärmeleitstrukturen 24 und/oder Gehäuse 26 möglich. Dadurch kann festgestellt werden, ob ggf. Nachbesserungen oder Reparaturen (möglicherweise auch ein Ersetzen der Vorrichtung) notwendig sind.

### Bezugszeichenliste

- 1: PTC-Heizelement
- 2: Vorrichtung
- 3: Flüssiges Additiv
- 4: Elektrischer Leiter
- 5: Spannungsquelle
- 6: Einschaltstrom
- 7: Erster Wert
- 8: Betriebsspannung
- 9: Mindestdauer
- 10: Elektrischer Strom
- 11: Prüfzeit
- 12: Betriebsstrom
- 14: Betriebsparameter
- 15: Überwachungseinheit
- 16: Kraftfahrzeug
- 17: Verbrennungskraftmaschine
- 18: Abgasbehandlungsvorrichtung
- 19: Abgas
- 20: Zugabevorrichtung
- 21: Abgasreinigungskomponente
- 22: Zugabeleitung
- 23: Tank
- 24: Wärmeleitstruktur
- 25: Pumpe
- 26: Gehäuse
- 27: Tankboden
- 28: Leitungsanschluss
- 29: Ansaugstelle
- 30: Filter
- 31: Elektrische Spannung
- 32: Grobfilter
- 33: Zeit
- 34: Temperatur
- 35: Umgebungstemperatur
- 36: Kanal
- 37: Zweiter Wert

## Patentansprüche

1. Verfahren zur Funktionsprüfung mindestens eines PTC-Heizelementes (1), das in einer Vorrichtung (2) zur Bereitstellung eines flüssigen Additivs (3) eingesetzt ist, wobei das mindestens eine PTC-Heizelement (1) über elektrische Leiter (4) mit einer Spannungsquelle (5) verbunden ist; umfassend zumindest die folgenden Schritte:
a) Bereitstellen eines Einschaltstroms (6) mit einem ersten Wert (7) bei einer vorbestimmten Betriebsspannung (8); und dann
b) Überwachen, ob der Einschaltstrom (6) mit dem ersten Wert (7) für eine Mindestdauer (9) bereitgestellt wird, wobei die Mindestdauer (9) mindestens 5 Sekunden beträgt.

2. Verfahren nach Patentanspruch 1, wobei nach Schritt b) eine Fehlfunktion des mindestens einen PTC-Heizelementes (1) festgestellt wird, wenn der Einschaltstrom (6) den ersten Wert (7) während der Mindestdauer (9) unterschreitet.

3. Verfahren nach einem der vorhergehenden Patentansprüche, umfassend zumindest die zusätzlichen, auf Schritt b) nachfolgenden Schritte:
c) Überprüfen, ob während des Ablaufs einer Prüfzeit (11) seit Schritt a) kontinuierlich ein elektrischer Strom (10) bereitgestellt wird; und dann
d) Überprüfen, ob nach Ablauf einer Prüfzeit (11) nach Schritt a) ein elektrischer Betriebsstrom (12) mit mindestens einem zweiten Wert (37) bereitgestellt wird, wobei gilt: Prüfzeit (11) > Mindestdauer (9).

4. Verfahren nach Patentanspruch 3, wobei nach Schritt d) erkannt wird, dass eine Wärmeableitung von dem mindestens einen PTC-Heizelement (1) fehlerhaft ist, wenn der elektrische Betriebsstrom (12) den zweiten Wert unterschreitet.

5. Verfahren nach einem der Patentansprüche 3 oder 4, wobei nach Schritt d) mindestens einer der folgenden Fehler in der Vorrichtung (2) erkannt wird, wenn der elektrische Betriebsstrom (12) den zweiten Wert (37) unterschreitet:
- eine fehlerhafte wärmeleitende Anbindung des mindestens einen PTC-Heizelementes (1) der Vorrichtung (2),
- eine fehlerhafte wärmeleitende Anbindung mindestens einer Wärmeleitstruktur (24) der Vorrichtung (2), und
- Risse in einer Wärmeleistruktur (24) oder einen Gehäuse (26) der Vorrichtung (2).

6. Verfahren nach einem der vorhergehenden Patentansprüche, wobei zumindest für einen der Schritte b) und d) zumindest ein Betriebsparameter (14) der Vorrichtung (2) berücksichtigt wird, wobei die Vorrichtung (2) folgende Betriebsparameter (14) aufweist:
• Temperatur (34) des flüssigen Additivs (3);
• Umgebungstemperatur (35) der Vorrichtung (2);
• Temperatur (34) des mindestens einen PTC-Heizelements (1).

7. Vorrichtung (2) zur Bereitstellung eines flüssigen Additivs (3), aufweisend mindestens ein PTC-Heizelement (1), welches dazu eingerichtet ist, eingefrorenes flüssiges Additiv (3) in der Vorrichtung (2) aufzuschmelzen; wobei die Vorrichtung (2) mit einer Überwachungseinheit (15) verbunden ist, die zur Durchführung des Verfahrens gemäß einem der vorhergehenden Patentansprüche konzipiert ist.

8. Kraftfahrzeug (16), aufweisend eine Verbrennungskraftmaschine (17), eine Abgasbehandlungsvorrichtung (18) zur Reinigung der Abgase (19) der Verbrennungskraftmaschine (17) und eine Vorrichtung (2) nach Patentanspruch 7 zur Bereitstellung eines flüssigen Additivs (3) für die Abgasbehandlungsvorrichtung (18).

## Claims

1. Method for checking the function of at least one PTC heating element (1) which is used in a device (2) for providing a liquid additive (3), wherein the at least one PTC heating element (1) is connected to a voltage source (5) via electric conductors (4), comprising at least the following steps:
a) providing a switch-on current (6) with a first value (7) at a predetermined operating voltage (8); and then
b) monitoring whether the switch-on current (6) with the first value (7) is provided for a minimum duration (9), wherein the minimum duration (9) is at least five seconds.

2. Method according to Patent Claim 1, wherein according to step b) a malfunction of the at least one PTC heating element (1) is detected if the switch-on current (6) undershoots the first value (7) during the minimum duration (9).

3. Method according to one of the preceding patent claims, comprising at least the additional steps following step b):
c) checking whether, during the passing of a checking time (11) since step a) an electric current (10) is provided continuously; and then
d) checking whether after the expiry of a checking time (11) an electric operating current (12) with at least one second value (37) is provided according to step a), wherein the following applies: checking time (11) > minimum duration (9).

4. Method according to Patent Claim 3, wherein according to step d) it is detected that conduction away of heat from the at least one PTC heating element (1) is faulty if the electric operating current (12) undershoots the second value.

5. Method according to one of Patent Claims 3 or 4, wherein according to step d) at least one of the following faults is detected in the device (2) if the electric operating current (12) undershoots the second value (37):
- a faulty heat-conducting connection of the at least one PTC heating element (1) of the device (2),
- a faulty heat-conducting connection of at least one heat-conducting structure (24) of the device (2), and
- fractures in a heat-conducting structure (24) or a housing (26) of the device (2).

6. Method according to one of the preceding patent claims, wherein at least one operating parameter (14) of the device (2) is taken into account at least for one of the steps b) and d), wherein the device (2) has the following operating parameters (14):
• temperature (34) of the liquid additive (3);
• ambient temperature (35) of the device (2); and
• temperature (34) of the at least one PTC heating element (1).

7. Device (2) for providing a liquid additive (3), having at least one PTC heating element (1) which is configured to melt frozen liquid additive (2) in the device (2), wherein the device (2) is connected to a monitoring unit (15) which is designed for carrying out the method according to one of the preceding patent claims.

8. Motor vehicle (16) having an internal combustion engine (17), an exhaust gas treatment device (18) for purifying the exhaust gases (19) of the internal combustion engine (17), and a device (2) according to Patent Claim 7 for providing a liquid additive (3) for the exhaust gas treatment device (18).

## Revendications

1. Procédé de contrôle du fonctionnement d'au moins un élément chauffant CTP (1), utilisé dans un dispositif (2) servant à fournir un additif liquide (3), dans lequel l'au moins un élément chauffant CTP (1) est relié par l'intermédiaire de conducteurs électriques (4) à une source de tension (5) ;
comprenant au moins les étapes consistant à :
a) fournir un courant d'activation (6) ayant une première valeur (7) pour une tension de fonctionnement (8) prédéterminée ; puis
b) surveiller si le courant d'activation (6) ayant la première valeur (7) est fourni pendant une durée minimale (9), dans lequel la durée minimale (9) a une valeur d'au moins 5 secondes.

2. Procédé selon la revendication 1, dans lequel un dysfonctionnement de l'au moins un élément chauffant CTP (1) est détecté conformément à l'étape b) lorsque le courant d'activation (6) s'abaisse pendant la durée minimale (9) en-dessous de la première valeur (7).

3. Procédé selon l'une des revendications précédentes, comprenant au moins les étapes supplémentaires consistant, après l'étape b), à :
c) vérifier si un courant électrique (10) est fourni en continu pendant un temps de vérification (11) écoulé depuis l'étape a) ; puis
d) vérifier si un courant électrique de fonctionnement (12) ayant au moins une seconde valeur (37) est fourni après l'écoulement d'un temps de vérification (11) après l'étape a), dans lequel on a : temps de vérification (11) > durée minimale (9) .

4. Procédé selon la revendication 3, dans lequel il est détecté conformément à l'étape d) qu'une dissipation de chaleur d'au moins un élément chauffant CTP (1) est défectueuse si le courant de fonctionnement électrique (12) s'abaisse en-dessous de la seconde valeur.

5. Procédé selon l'une des revendications 3 ou 4, dans lequel, conformément à l'étape d), au moins l'un des défauts suivants est détecté dans le dispositif (2) lorsque le courant électrique de fonctionnement (12) s'abaisse en-dessous de la seconde valeur (37) :
- un raccordement conducteur de chaleur défectueux de l'au moins un élément chauffant CTP (1) du dispositif (2),
- un raccordement conducteur de chaleur défectueux d'au moins une structure conductrice de chaleur (24) du dispositif (2), et
- des fissures dans une structure conductrice de chaleur (24) ou un boîtier (26) du dispositif (2).

6. Procédé selon l'une des revendications précédentes, dans lequel au moins un paramètre de fonctionnement (14) du dispositif (2) est pris en compte pour au moins l'une des étapes b) et d), dans lequel le dispositif (2) présente les paramètres de fonctionnement (14) suivants :
• température (34) de l'additif liquide (3) ;
• température ambiante (35) du dispositif (2) ;
• température (34) de l'au moins un élément chauffant CTP (1) .

7. Dispositif (2) destiné à fournir un additif liquide (3), comportant au moins un élément chauffant CTP (1) qui est conçu pour faire fondre un additif liquide congelé (3) dans le dispositif (2) ; dans lequel le dispositif (2) est relié à une unité de surveillance (15) conçue pour mettre en oeuvre le procédé selon l'une des revendications précédentes.

8. Véhicule automobile (16), comprenant un moteur à combustion interne (17), un dispositif de traitement des gaz d'échappement (18) destiné à purifier les gaz d'échappement (19) du moteur à combustion interne (17) et un dispositif (2) selon la revendication 7 servant à fournir un additif liquide (3) destiné au dispositif de traitement des gaz d'échappement (18) .
